# EUROPEAN PATENT APPLICATION

(11) **EP 4 183 959 A1**
(43) Date of publication of application: **24.05.2023**
(21) Application number: 22205936.2
(22) Date of filing: 07.11.2022
(51) Int. Cl.: E05B 47/00, A01K 1/02, E05C 9/04, E05C 9/06, E05C 9/12

(54) **LOCK FOR A PET TRANSPORTER**

(30) Priority: 19.11.2021 CN 202122854186 U
(71) Applicant: Ningbo Hongdu Model Plastics Co., Ltd., Ningbo, Zhejiang 315202 (CN)
(72) Inventor: PAN, Zhongjie, Ningbo, Zhejian, 315202 (CN)
(74) Representative: Stolmár & Partner Patentanwälte PartG mbB

(57) **Abstract**

The present disclosure relates to a lock for a pet transporter. The lock comprising a gear drive set, at least one pair of lock rods, and a chassis. Each lock rod comprising an inner end comprising a rack portion having a structure for engaging with a transmission gear of the gear drive set, each transmission gear having a structure for engaging with a main gear of the gear drive set such that rotation of the main gear drives rotation of each engaged transmission gear. Wherein, in use, rotation of the main gear in a first direction synchronously drives the first pair of lock rods into the corresponding lock holes to engage the lock, and rotation of the main gear in an opposite direction synchronously drives the first pair of lock rods out of the corresponding lock holes to disengage the lock.

## Description

### PRIORITY DOCUMENTS

The present application claims priority from Chinese Patent Application No. 2021228541865 filed on 19 November 2021, the content of which is hereby incorporated by reference in its entirety.

### TECHNICAL FIELD

The present disclosure relates to a lock for a pet transporter. In a particular, the present disclosure relates to a lock that is mounted on a door body of a pet transporter, wherein the lock is designed to prevent a pet contained within the transporter from escaping.

### BACKGROUND

Pet transporters, kennels, containers and boxes are well known for their use as a place for pets to rest, be contained, secured and transported.

Typical pet transporters and their structures include a box body and a door, wherein the door is fixed to the box body at an opening and when open, the door allows the box body to facilitate the entry and exit of pets through the opening. Additionally, the door generally is composed of a metal grille, or a crisscrossing grid of metal strips, to allow the contained pet to be observed, facilitate airflow through the pet transporter, and also allow for light to be transmitted into the box body. At one side of the door is typically a longitudinal shaft that facilitates attachment of the door to a corresponding side of the opening of the box body, and at an opposite side of the door is a lock that corresponds to an opposite side of the opening of the box body. Wherein, at this opposite side of the opening of the box body, is a means to allow for the lock to engage a 'locked position' to prevent the door from opening, and also to disengage to an 'unlocked position' to allow the door to open.

Prior art document CN107091022A discloses a pet lock comprising two straight metal lock strips and a turntable, wherein in use, the turntable rotates at a center point to drive the metal lock strips in a straight line to engage the lock.

Another prior art document, CN105064819A, discloses a pet lock comprising a rotating disc and four metal lock strips, wherein the rotating disc is provided with four curved tracks, each corresponding to a metal lock strip to act so as to force an end of the each metal lock traverse along a straight line to engage the lock.

The present inventors noted that in the prior art, pet locks are often unintentionally unlocked even when they are engaged in a 'locked position', often by knocking the pet lock (and/or door) via an external force, or by knocking the pet lock (and/or door) via an internal force (i.e. the contained pet).

It is against this background and the problems and difficulties associated therewith, that the present invention has been developed.

Throughout this disclosure, "pet box", "pet transporter", "pet carrier" should all be understood to refer to the same product, that is, a product with the ability to contain, secure and transport in various means, including aircraft, one or more pets therein.

Additionally, throughout this disclosure reference to the orientation or positional relationship between features are often accompanied by terms such as "up", "down", "upper", "lower", "front", "back", "rear", "inner", "inside", "outer", "outside", etc. It should be appreciated that the orientation or positional relationship used between features will refer to an embodiment of the disclosure in use, and may only be for the convenience of describing the embodiment and simplifying the description, rather than indicating or implying that the feature of the embodiment is restricted to that specific orientation, position, construction, etc. and not be construed as a limitation of the present disclosure.

### SUMMARY

Embodiments of the present disclosure relate to a lock for a pet transporter, wherein the lock is particularly configured to synchronously drive one or more pairs of lock rods via a gear drive set to engage and disengage the lock.

According to a first aspect of the present disclosure, there is provided a lock for a pet transporter; the lock comprising chassis housing a gear drive set, and at least two lock rods, wherein each lock rod extends from the gear drive set toward a corresponding lock hole on a door frame of the pet transporter; wherein the gear drive set comprises a main gear comprising a tooth structure co-operable with a rack portion at an inner end of each lock rod; wherein, in use, rotation of the main gear in a first direction synchronously drives the lock rods into the corresponding lock holes to engage the lock, and rotation of the main gear in an opposite direction synchronously drives the lock rods out of the corresponding lock holes to disengage the lock.

In one form, the rack portion of each lock rod comprises a tooth structure co-operable with the tooth structure of the main gear.

In one form, the tooth structure of the main gear co-operates with the rack portion of each lock rod by means of a transmission gear.

In one form, the lock comprises four lock rods arranged in a cross configuration centred at the main gear, such that the rack portion of each lock rod co-operates with the main gear.

In one form, the four lock rods comprise a first pair of lock rods and a second pair of lock rods that extend perpendicularly to the first pair, wherein the rack portions of each pair of lock rods are layered one above the other at the main gear.

In one form, each the inner end of each lock rod comprises a transmission section comprising a bent structure that enables the rack portion of each lock rod to engage with the main gear such that the lock rods of each of the first and second pairs remain in parallel or in a straight line opposite each other.

In one form, each the inner end of each lock rod comprises a transmission section comprising a bent structure that enables the rack portion of each lock rod to engage with the main gear such that the lock rods of each of the first and second pairs remain in parallel or in a straight line opposite each other.

In one form, the rack portion of each lock rod, the transmission gear, and the main gear co-operate in a rack and pinion arrangement.

In one form, the chassis further comprises a bottom wall and a perimeter side wall, wherein the bottom wall is provided with a positioning column for locating the main gear, and wherein the perimeter side wall is provided with a plurality of through holes, each through hole corresponding to each of the lock rods to pass there through.

In one form, the lock further comprises a shell comprising a cavity sized and shaped to receive at least a portion of the chassis, the gear drive set and a portion of the lock rods therein, a top of the shell comprising a first aperture for a rotatable knob and a second aperture for an anti-rotation knob, wherein rotation of the rotatable knob translates to rotation of the main gear, and wherein the anti-rotation knob having a first state whereby rotation of the rotatable knob is limited, and a second state whereby rotation of the rotatable knob is permitted.

In one form, the chassis further comprises one or more guide members positioned on the bottom wall so as to guide movement of each lock rod in a linear path.

In one form, the chassis further comprises a spring for the main gear, whereby the spring biases the main gear to synchronously drive the lock rods into their corresponding lock holes to engage the lock.

In one form, two of the four lock rods each comprise a handle member, wherein in use, squeezing the handle members cause rotation of the main gear and resultantly drive the other two lock rods to disengage the lock.

In one form, the gear drive set comprises four transmission gears, each transmission gear surrounding the main gear such that each transmission gear connects a corresponding lock rod to the main gear, wherein an angle between each lock rod is 90 degrees.

According to a second aspect of the present disclosure, there is provided a pet transporter and a lock therefor, the pet transporter comprising: a box body comprising an opening comprising a door frame, the door frame comprising a door body connected thereto along one side of the door frame, the door frame further comprising at least two lock holes; wherein the lock is installed on the door body such that each lock rod of the lock corresponds and is engageable with the lock holes to engage and disengage the lock, and secure or release the door body such that the opening is accessible.

According to a further aspect of the present disclosure, there is provided a lock for a pet transporter; the lock comprising a chassis housing a gear drive set, at least two lock rods, a shell comprising a cavity sized and shaped to receive at least a portion of the chassis, and a rotatable knob extending through an aperture of the shell; wherein an inner end of each lock rod comprises a rack portion having a structure for engaging with a transmission gear of the gear drive set, each transmission gear having a structure for engaging with a main gear of the gear drive set such that rotation of the main gear drives rotation of each engaged transmission gear; wherein the chassis comprises a bottom wall and a perimeter side wall, wherein the bottom wall is provided with a positioning column for locating the main gear, wherein the perimeter side wall is provided with a plurality of through holes, each through hole corresponding to each of the lock rods to pass there through; and wherein, in use, rotation of the rotatable knob translates to rotation of the main gear, such that rotation in a first direction synchronously drives the lock rods outward in a linear direction to engage the lock, and rotation in an opposite direction synchronously drives the lock rods inward in a linear direction to disengage the lock.

### BRIEF DESCRIPTION OF DRAWINGS

Embodiments of the present disclosure will be discussed with reference to the accompanying drawings wherein:
Figure 1 is a perspective view of a pet transporter according to an embodiment;
Figure 2 is a perspective view of a front of the pet transporter of Figure 1;
Figure 3 is an exploded view of a lock for the pet transporter of Figures 1 and 2;
Figure 4 is a schematic perspective view of an internal gear mechanism of the lock of Figure 3;
Figure 5 is a top view of the internal gear mechanism of Figure 4;
Figure 6 is an alternative view of an internal mechanism of the lock of Figure 3;
Figure 7 is an exploded view of an alternative lock for the pet transporter of Figures 1 and 2;
Figure 8 is a schematic perspective view of the alternative lock of Figure 7;
Figure 9 is a perspective view of the alternative lock of Figure 7 as assembled;
Figure 10 is a perspective view of a first pair of lock rods of the alternative lock in Figure 7;
Figure 11 is a perspective view of a second pair of lock rods of the alternative lock in Figure 7;

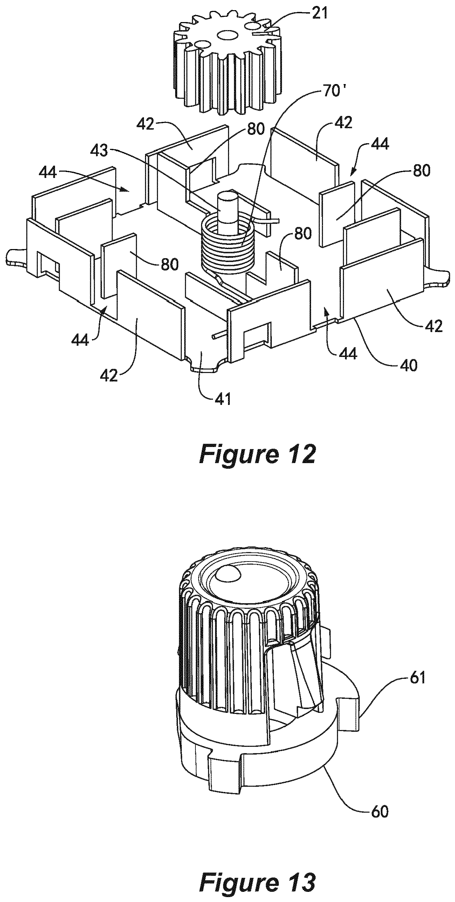

Figure 12 is a perspective view of an internal gear mechanism of the alternative lock in Figure7;
Figure 13 is a perspective view of an anti-error opening knob of any one of the locks in Figures 1 to 12;
Figure 14 is a schematic diagram illustrating a relative position of the anti-error opening knob in a locked position;
Figure 15 is a schematic diagram illustrating a relative position of the anti-error opening knob in an open position; and
Figure 16 is a schematic view of a plan after the lock assembly in Figure 7.

In the following description, like reference characters designate like or corresponding parts throughout the figures. It will be appreciated that the Figures illustrate the disclosure as preferred embodiments only, and those skilled in the art will appreciate that the Figures are only drawn for the purpose of accompanying the detailed description below. Furthermore, unless otherwise indicated, the Figures are merely schematic representations of the composition or construction of the disclosed embodiments and may contain exaggerated representations that are not necessarily drawn to scale.

It should be noted that in the following disclosure, like numerals refer to like items, such that once an item has been defined in any part of the disclosure, it may not be further defined and/or explained subsequently.

### DESCRIPTION OF EMBODIMENTS

Referring to any one of the Figures, there is illustrated a lock 100 for a pet transporter 200, according to an embodiment, the lock 100 comprises a chassis 40 housing a gear drive set 20, and at least two lock rods 30. Each lock rod 30 extends from the gear drive set 20 toward a corresponding lock hole on a door frame 203 of the pet transporter 200. The gear drive set 20 comprises a main gear 21 comprising a tooth structure co-operable with a rack portion 31 at an inner end of each lock rod 30. In use, rotation of the main gear 21 in a first direction synchronously drives the lock rods 30 into the corresponding lock holes to engage the lock 100, and rotation of the main gear 21 in an opposite direction synchronously drives the lock rods 30 out of the corresponding lock holes to disengage the lock 100.

Referring still to any one of the Figures, there is illustrated the lock 100 for the pet transporter 200, capable of securing a pet accommodated within the transporter 200, to achieve the function of transporting and restraining said pet. The pet transporter 200 comprises a box body 201, and at one side of the body 201, an opening around the circumference of which is a door frame 203. The door frame 203 is also provided with one or more lock holes, each being capable of engaging and disengaging with the lock 100 to lock or unlock the door body 202 such that the opening of the box body 201 is accessible (e.g. to a pet).

It will be understood from the embodiments that follow, that the lock 100 is typically installed on the door body 202. When referring to 'engaging', 'engaged', 'lock', 'locked' or the like, it will be understood that this indicates that the lock 100 is in its configuration where it prevents the door body 202 from opening to and the box body 201 of the pet transporter 200 is inaccessible. Conversely, when referring to 'disengaging', 'disengaged', 'unlock', 'unlocked' or the like, it will be understood that this indicates that the lock 100 is its configuration where it allows the door body 202 to be opened and the box body 201 of the pet transporter 200 is accessible.

It will also be understood from the embodiments that follow, that there are disclosed herein two examples of the lock 100. The first will be referred to as 'Example 1', and the second will be referred to as 'Example 2'. It will be appreciated that like reference numerals will refer to like features, and where applicable, reference and disclosure of these features will not be repeated but be understood to be the same as already described.

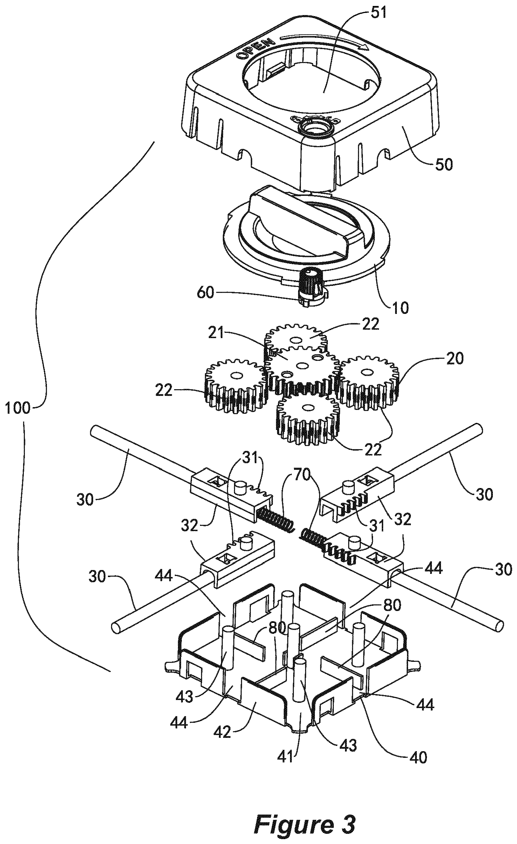

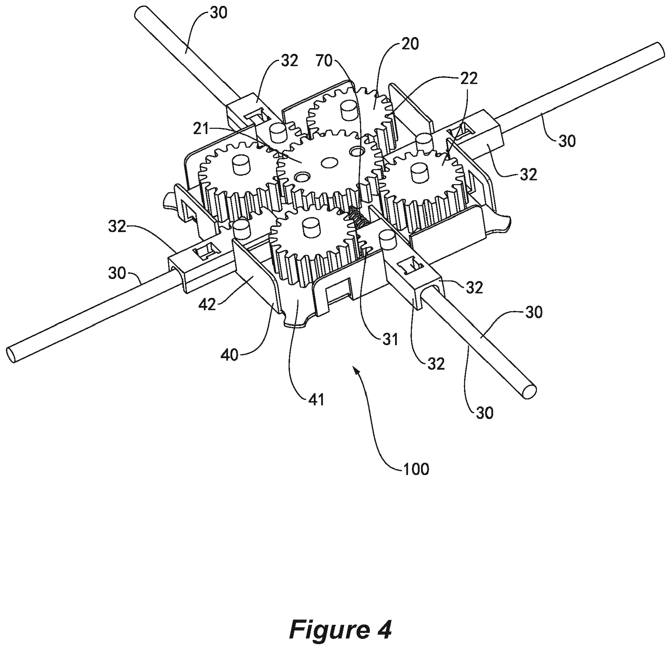

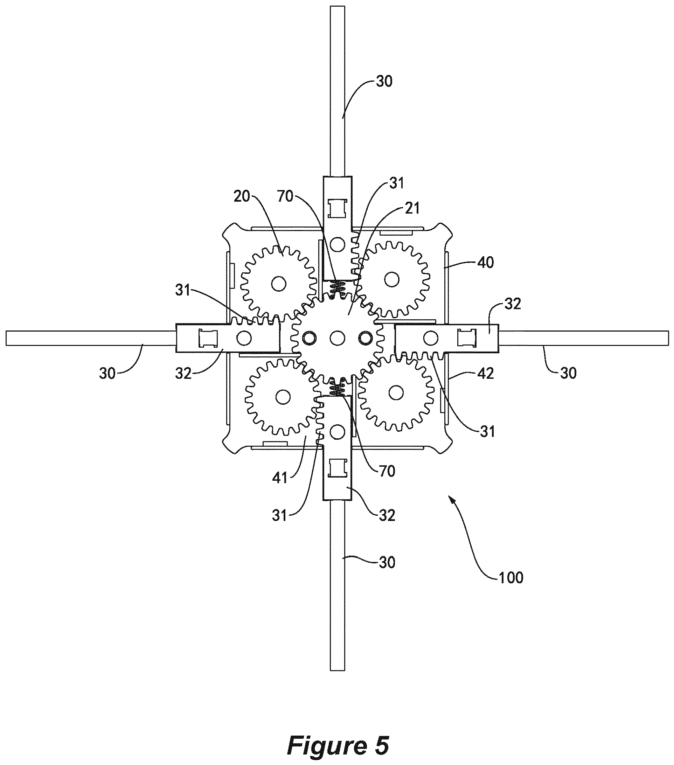

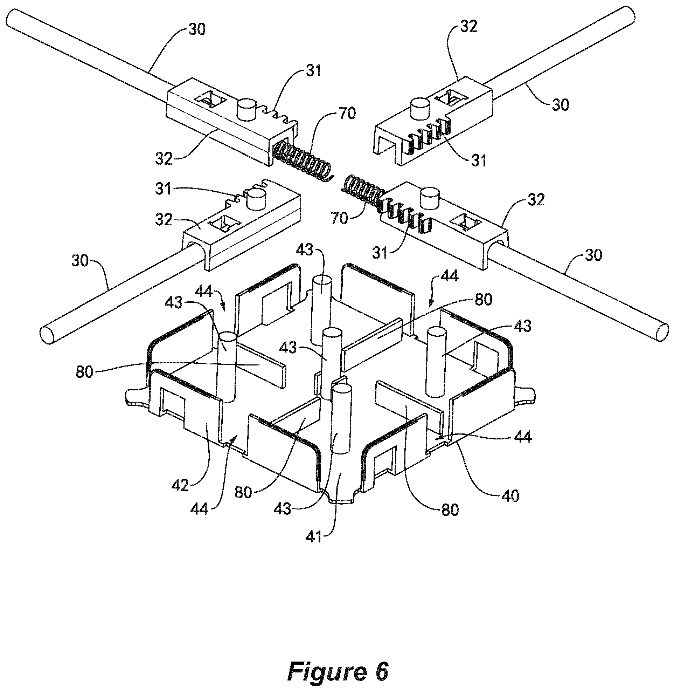

Referring to Figures 3 to 6, there is disclosed Example 1 of the lock 100. The lock 100 comprising the chassis 40 housing the gear drive set 20, and at least two lock rods 30 (note that four lock rods 30 are illustrated). Each of the lock rods 30 extend from the gear drive set 20, which may be centrally positioned within the chassis 40, toward a corresponding lock hole on the door frame 203 of the pet transporter 200. That is to say, that an outer end of each of the lock rods 30 is proximal or at the corresponding lock hole thereof, and an inner end of each of the lock rods 30 is proximal or at the gear drive set 20. Each of the lock rods 30 may be constructed of a metal or other sturdy, yet easily manoeuvrable material for the purposes disclosed herein.

The inner end of each lock rod 30 comprises the rack portion 31, wherein the rack portion 31 comprises a structure that is capable of engaging with a transmission gear 22 of the gear drive set 20. Each transmission gear 22 also having a structure that enables each gear 22 to engage with the main gear 21 of the gear drive set 20, such that rotation of the main gear 21 drives rotation of each engaged transmission gear 22. Accordingly, it will be understood that rotation of the main gear 21 translates to drive each of the lock rods 30, such that each lock rod 30 is driven synchronously toward and away from its corresponding lock hole to engage or disengage the lock 100. Particularly, the lock 100 in use, rotation of the main gear 21 in a first direction synchronously drives the lock rods 30 into the corresponding lock holes to engage the lock 100, and rotation of the main gear 21 in an opposite direction synchronously drives the lock rods 30 out of the corresponding lock holes to disengage the lock 100.

Referring still to Figures 3 to 6, the rack portion 31 of each lock rod 30 is a tooth structure (such as one found in rack and pinion type arrangements) that is co-operable with a corresponding tooth structure of the transmission gear 22. Additionally, this tooth structure of each transmission gear 22 is also co-operable with a tooth structure of the main gear 21 (similarly, such as one found in a rack and pinion type arrangement or a gear meshing type arrangement). Alternatively, it will be understood that the rack portion 31 of each lock rod 30 is also co-operable with the tooth structure of the main gear 21.

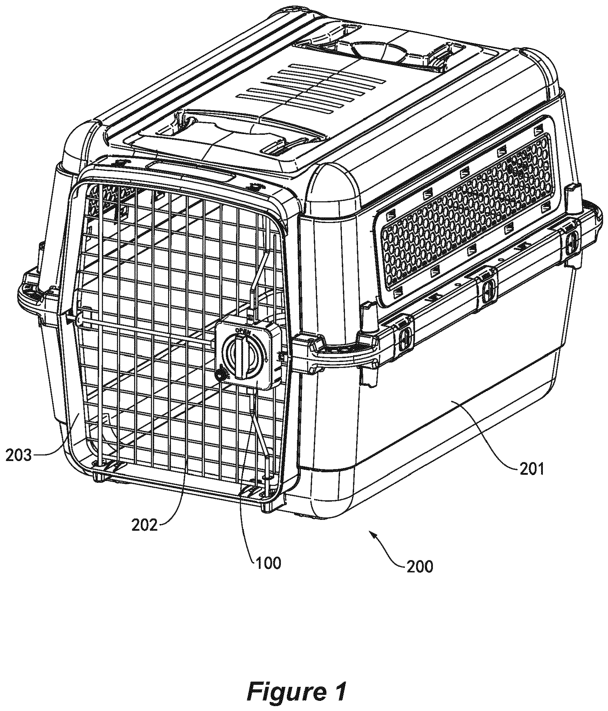

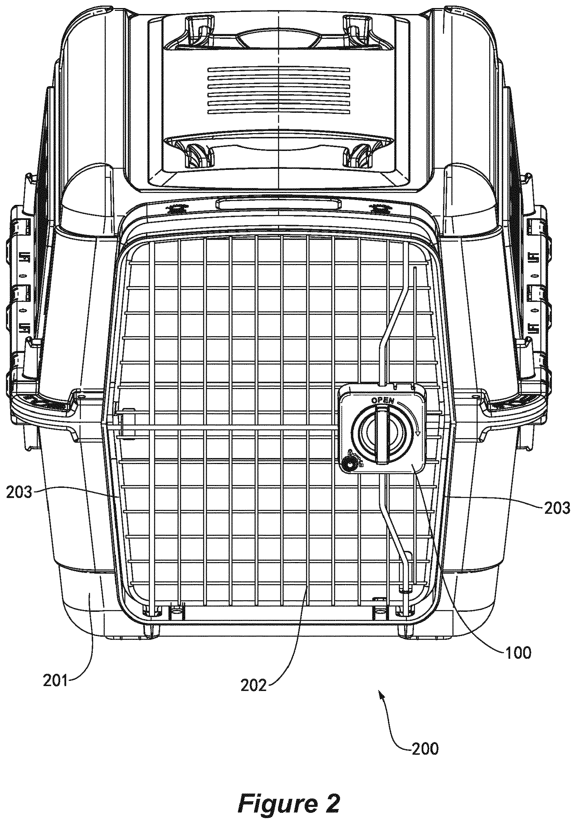

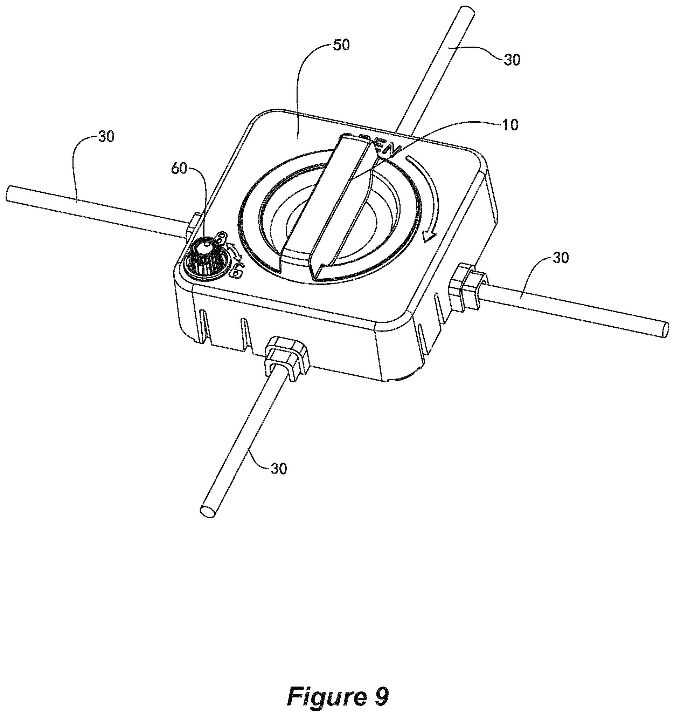

Referring particularly to Figures 1 to 3, 7 and 9, in any one of the above or following embodiments, the lock 100 further comprises a rotatable knob 10 (may also be considered a knob, rotary button or turntable). Wherein, in use, rotation of the rotatable knob 10 translates to rotation of the main gear 21. Thus, rotation of the rotatable knob 10 in the first direction results in rotation of the main gear 21 and synchronous drive of the lock rods 30 into the corresponding key holes to engage the lock 100, and rotation of the rotatable knob in an opposite direction results in rotation of the main gear 21 and synchronous drive of the lock rods 30 out of the corresponding lock holes to disengage the lock 100. It will be understood that rotation of the rotatable knob 10 drives rotation of the main gear 21, which then drives rotation of the transmission gears 22, and resultantly drives the lock rods 30 to engage or disengage the lock 100 from the lock holes of the pet transporter 200.

In one embodiment, as illustrated in Figures 3 to 5, the gear drive set 20 may comprise four transmission gears 22. Each transmission gear 22 in this embodiment surrounding the main gear 21 such that the structure for engaging contacts both the main gear 21 and each of the lock rods 30, wherein an angle between the lock rods in each pair (illustrated in any one of the Figures) is 90 degrees.

In one embodiment, the inner end of each lock rod 30 comprises a transmission section 32, wherein the transmission section 32 comprises the rack portion 31 on one of its sides to engage with the gear drive set 20.

In one embodiment, the chassis 40 comprises a bottom wall 41 and a perimeter side wall 42. The bottom wall 41 is provided with a positioning column 43 for locating the main gear 21 thereon, and accordingly the positioning column 43 also guides the location of the transmission gears 22 about the main gear 21. The perimeter side walls 42 are provided with a plurality of through holes 44, wherein each through hole corresponds to each of the lock rods 30, such that each lock rod 30 extends through each through hole 44 toward its corresponding lock hole on the door frame 203.

In one embodiment, illustrated in Figures 3, 7 and 9, the lock 100 further comprises a shell 50 comprising a cavity sized and shaped to receive at least a portion of the chassis 40, the gear drive set 20, and a portion of the lock rods 30 therein. A top of the shell comprises a first aperture for the rotatable knob 10 to extend (and be accessible to) therethrough, and a second aperture for an anti-rotation knob 60. It will be appreciated that the shell 50 serves the purpose of making the overall appearance of the lock 100 more aesthetically pleasing, and protecting the interior of the lock 100. The shell 50 may also serve the purpose of concealing the inner parts of the lock 100, and prevent these parts from being tampered with accidentally. The shell 50 may be manufactured of a sturdy, tough material to adequately be able to withstand impact to not damage the inner parts (e.g. the portion of the chassis 40, the gear drive set 20, and the portion of the lock rods 30).

In one embodiment, wherein the lock 100 comprises the shell 50 with the anti-rotation knob 60, the anti-rotation knob 60 has the purpose of either limiting or allowing rotation of the rotatable knob 10. That is, the anti-rotation knob 60 comprises a first state, whereby rotation of the rotatable knob 10 is limited (i.e. disabled such that it may not be rotated in either the first or opposite directions), and it also comprises a second state, whereby rotation of the rotatable knob 60 is permitted (i.e. enabled such that it may be rotated in either the first or opposite directions).

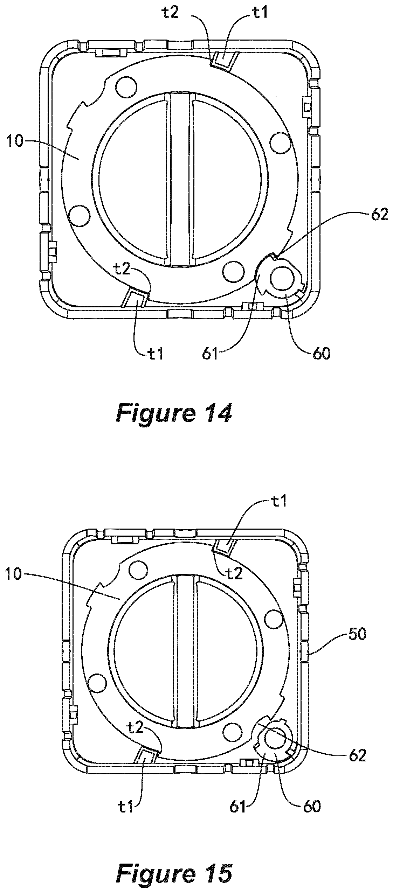

Referring now to Figures 14 and 15, the anti-rotation knob 60 comprises a locking portion 61 which corresponds to a limiting slot 62 on the rotatable knob 10. Such that, in use, when the anti-rotation knob 60 is in its first state, whereby rotation of the rotatable knob 10 is limited, the locking portion 61 is embedded or abuts against the locking slot 62. In its second state, whereby rotation of the rotation knob 10 is permitted, the locking portion 61 detaches (or is no longer abutting against) the locking slot 62, thereby allowing the rotating knob to rotate in either the first or opposite directions to engage or disengage the lock 100.

In one embodiment, an inside of the perimeter side walls 42 of the shell 50 comprises a plurality of limiting projections t1, such that each limiting projection t1 corresponds to a limiting slot t2 on an outer edge of a portion of the rotary knob 10 that is within the shell 50. Such that, in use, when the limiting projection t1 of the shell 50 abuts against (engages) the limiting slot t2 of the rotatable knob 10, the rotatable knob 10 is unable to be further rotated in the direction it was rotated to allow for the limiting projections t1 to be engaged. It will be understood, from Figures 14 and 15, that when the limiting projections t1 are engaged with the limiting slots t2, the locking portion 61 on the anti-rotation knob 60 is also embedded in the locking slot 62.

Additionally, the locking portion 61 and an outer end of the limiting projection t1 may comprise an arc shaped surface that corresponds to the locking slot 62 and the limiting slot t2, which are oppositely shaped arc surfaces. It will be understood that these arc surfaces have corresponding radians, and thus match with one another and the rotation trajectory of the rotatable knob 10.

In any one of the embodiments, the transmission section 32 of a pair of lock rods 30 may be provided with a reset spring 70, such that the reset spring 70 acts against the gear drive set 20 when it is driven to disengage the lock 100. That is to say, the reset spring 70 of the lock rods 30 act so as to bias the lock 100 to the engaged position (i.e. whereby the lock rods 30 are in their respective lock holes in the door frame 203).

In any one of the embodiments, the chassis 40 further comprises a spring 70' for the main gear 21. Wherein, in use, the spring 70' biases the main gear 21 to synchronously drive the lock rods 30 into their corresponding lock holes to engage the lock 100. That is to say, the reset spring 70 of the main gear 21 acts so as to bias the lock 100 to the engaged position. The reset spring 70 'may, for example, be a torsion spring, specifically, the main gear 21 and the rotatable knob 10 is installed and interconnected via a linkage mechanism, when a user rotates the rotatable knob 10 to drive the main gear 21, further so that the lock rod 30 moves; when the user removes their applied external force applied on the rotatable knob 10, the spring 70 ' biases the main gear 21 back, and subsequently the lock rods and the rotatable knob 10 are also biased back to the engaged position of the lock 100.

In any one of the embodiments, the chassis 40 further comprises one or more guide members 80 positioned on the bottom wall 41, so as to guide movement of each lock rod 30 in a linear path (i.e. such that each lock rod 30 translates or moves in a linear movement) to engage and disengage the lock 100.

In one embodiment, the main gear 21 is provided with a positioning hole, whereby the corresponding position of a base wall of the rotatable knob 10 extends downward via a positioning bulge, whereby the positioning hole of the main gear 21 mates with the positioning bulge of the knob 10 to link the gear 21 to the knob 10. In use, a user may turn the rotatable knob 10 to drive the main gear 21, subsequently rotate the transmission gears 22, and thereby realise movement of each of the lock rods 30. It will be appreciated, in the embodiments comprising springs 70 and/or 70', the lock rods 30 will be biased back toward the engaged position of lock 100, thereby turning or resetting the rotatable knob 10. That is to say, the rotatable knob 10 is automatically returned to an original position (i.e. the engaged position) via the bias of the springs 70 and/or 70'.

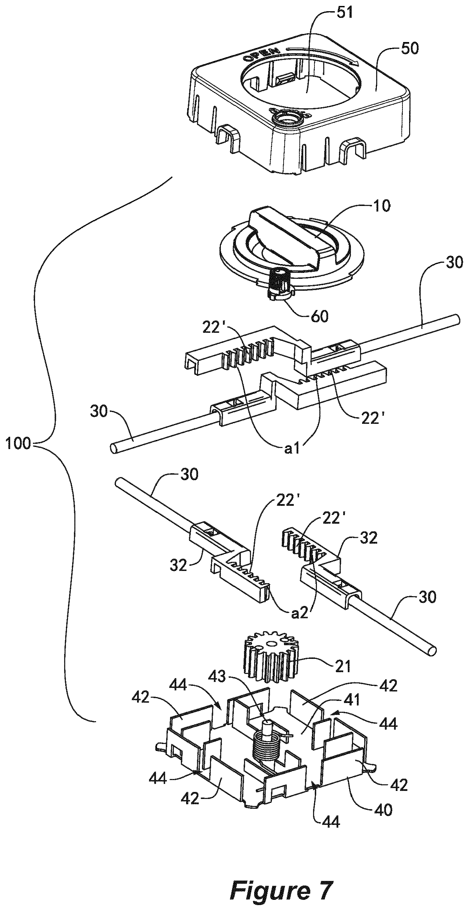

Now referring to Figures 7 to 11, there is illustrated Example 2 of the lock 100 for the pet transporter 200. In this Example 2, it will be appreciated that like features in the Figures that have been previously described in the above embodiments will not be repeated, and those like features are similarly utilised in this example of the lock 100.

Example 2 of the lock 100 comprises a second pair b2 of lock rods 30 that extend in a direction perpendicular to the first pair b1 of lock rods 30, such that the first b1 and second pair b2 of lock rods 30 is crossed at the gear drive set 20. That is to say, that the lock 100 comprises four lock rods 30 arranged in a cross configuration centred at the main gear 21, such that the rack portion 31 of each lock rod 30 co-operates with the main gear 21. In this example, the inner end of each lock rod 30 comprises a transmission section 32 comprising the rack portion 31, wherein the rack portions 31 corresponding to the first pair b 1 of lock rods 30 is the first group of rack portions a1, and the rack portions 31 corresponding to the second pair b2 of lock rods 30 is the second group of rack portions a2, wherein the rack portions 31 of both first a1 and second a2 groups comprise a structure for engaging with the main gear 21. That is to say, as illustrated in the Figures, the rack portions 31 of both the first a1 and second a2 groups of lock rods 30 in this Example 2 of the lock 100 meshes with the main gear 21 directly, without the requirement for transmission gears 22.

In Example 2 of the lock 100, the first b1 and second b2 pairs of lock rods 30 cross at the main gear 21 such that the first a1 and second a2 group of rack portions 31 are layered one above the other at the main gear 21. In this embodiment, the first b1 and second b2 pairs of lock rods 30 are located on the same plane.

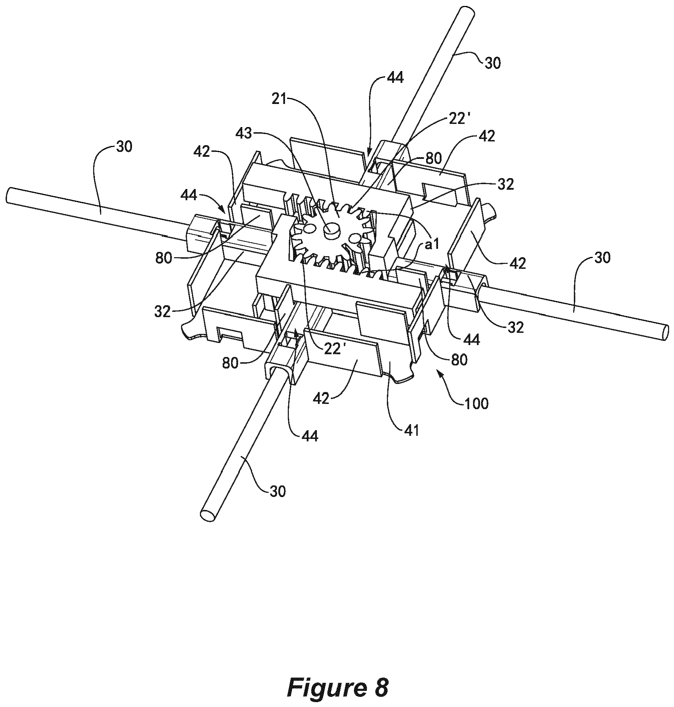

In an alternative embodiment of Example 2 of the lock 100, each transmission section of the first b1 and second b2 pairs of lock rods 30 comprises a bent structure to enable the rack portion a1, a2 of each lock rod 30 to engage with the main gear 21 such that the lock rods 30 of each pair b1, b2 remain parallel or in a straight line opposite each other (as best illustrated in Figure 8).

In this alternative example, the rod rack 22' corresponding to the first pair of lock rod b1 is the first set of rod rack a1; the rod rack corresponding to the second pair of lock rods b2 22' It is the second group of rod rack a2. The first group of rod racks a1 and the second group of rod racks a2 above and below the layering mode and the main gear 21 mesh. Preferably, the first group of lock racks a1 is in the meshing upper layer, the second group of rod racks a2 is in the meshing lower layer.

The specific technical means to achieve rod rack 22 ' layering is that the transmission section 32 comprises a bent structure, and the bent structure makes each rod rack 22' mesh with the main gear 21 respectively, and the bent structures allow the two lock rods opposite 30 to be maintained in a straight line or in the same plane.

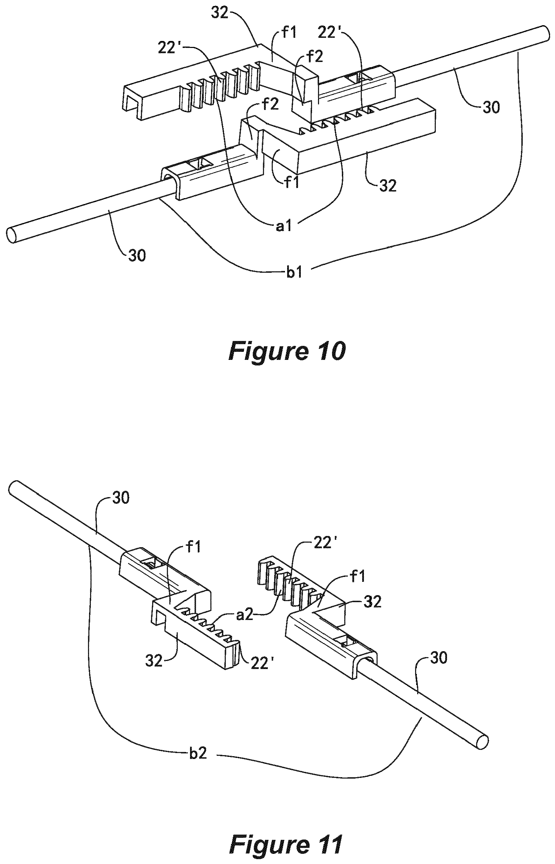

As best illustrated in Figure 10, the bent structure of the first set of rod rack a1 placed on the meshing upper layer comprises a transversely folding segment f1 and longitudinally folding segment f2, transversely folding segment f1 So that the corresponding first pair of lock rods b1 is in the same straight line, the longitudinally folding segment f2 so that the corresponding first pair of lock rods b1 and the second pair of lock rods b2 are at the same longitudinal height, that is, on the same plane.

As best illustrated in Figure 11, the bent structure of the second set of rod racks a2 placed in the meshing lower layer includes a cross-fold segment f1 so that the second pair of lock rods b2 is in the same straight line, or in the same plane.

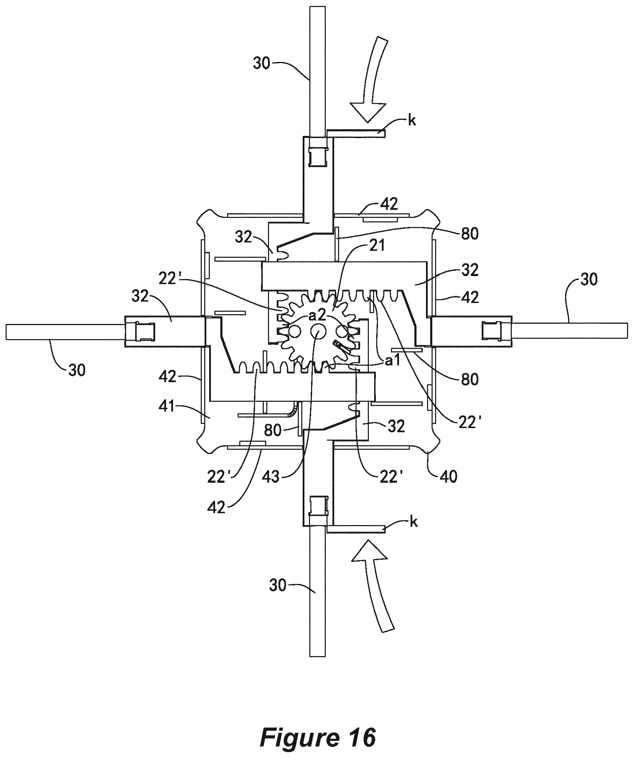

As best illustrated in Figures 8 and 16, by the structural arrangement of the bent structure, the (upper) first pair of lock rods b1 and the (lower) second pair of lock rods b2 are on the same plane of the chassis 40, and, Each pair of lock rods (b1 and B2) are in the same straight line (i.e. same plane as the other lock rod of each pair).

In one embodiment, the bottom wall 41 is provided with one or more guide members 80, wherein the guide members 80 allow for the linear movement of the lock rod 30, such that the movement of each lock rod 30 is guided. It will be appreciated that each of the lock rods 30 are manufactured of a metal to allow for rigidity and strength of each lock rod.

As shown in FIG. 16, in one embodiment, each rod 30, in one pair of lock rods (for example b2 as illustrated) are provided with a handle member k on each of the rods 30. Wherein the handle members k extend outwardly from its respective lock rod 30 to allow a user to manually apply a force to each handle member k in a 'pinching' manner (i.e. pushing the handle members k inward toward the chassis 40 of the lock 100, or by compressing the handle members k together, or by squeezing the handle members k together), whereby applying such a 'pinching' force to the handle members k facilitate to disengage the lock 100 by driving the interconnected pair of lock rods and subsequently the second pair of lock rods b1 (i.e. the upper lock rods) via the main gear 21, thereby driving all of the lock rods 30 out of the lock holes. That is to say, squeezing the handle members k causes rotation of the main gear 21 and resultantly drives the lock rods 30 to disengage the lock 100. It will be appreciated that the lock 100 is only disengaged during the time that the 'pinching' force is applied by a user to the handle members k, as when the force is removed, the reset spring 70' drives the main spring 21 (and correspondingly all of the lock rods 30) back toward the lock holes and into the engaged locked position. it will be appreciated that this embodiment comprising the handle members k allowing for the application of 'pinching' force to disengage (unlock) the lock 100, may be a feature of the lock 100 in conjunction with the knob 10 used to engage and disengage the lock 100, and the tabs k may be considered a backup or alternate disengagement means for the lock 100.

It will be appreciated that when compared with the prior art, the presently disclosed lock 100 for pet transporters 200, has a number of advantages. In particular, the lock 100 is locked (engaged) or unlocked (disengaged) by a combination of actions, the lock rods 30 and the gear drive set 20, and their 'rack' (or tooth structure) arrangement that allows transmission (or drive) to impart from each of the lock rods 30 to the gear drive set 20, and vice versa. The linear rack 31 of each lock rod 30 meshes with the corresponding 'rack' (or tooth structure) of the gear drive set 20, such that the main gear 21 rotates to impart drive onto each of the lock rods 30 to engage (lock) or disengage (unlock) each of the lock rods 30 from keyholes of the pet transporter 200 in a synchronised manner, thereby achieving the purpose of locking or unlocking the door 202 from the box body 201 of the pet transporter 200.

An additional advantage of the presently disclosed lock 100 is in the second example of the lock 100, wherein the lock 100 comprises the anti-rotation knob 60 and/or the tabs k, which each advantageously provide the lock 100 with an additional (or back up) locking (engaging) or unlocking (disengaging) means, should the primary knob 10 not be sufficient, or be adequate in securing a pet within the pet transporter 200.

It will be appreciated that the disclosed lock 100 for pet transporters 200 advantageously comprises features (as above) that prevent the unintentional unlocking of the lock when it is in its locked (or engaged) position, even when the lock 100 or any part of the pet transporter 200 is knocked by an external force (e.g. during transportation) or an internal force (e.g. by the contained pet).

It will be appreciated that the lock 100 of any one of the above embodiments is for a pet transporter 200 comprising the box body 201. The box body 201 comprising an opening comprising a door frame 203, the door frame 203 comprising a door body 202 connected thereto along one side of the door frame 203, the door frame 203 further comprising one or more lock holes; wherein the lock 100 of any one of the above embodiments is installed on the door body 202 such that each lock rod 30 of the lock 100 corresponds and is engageable with the one or more lock holes to engage and disengage the lock 100, and secure or release the door body 303 such that the opening is accessible.

Any reference in the present disclosure, it should be noted that (unless explicitly stated otherwise), that the terms "connection", "join", "installation" etc. should be understood in a broad sense. By way of example, there may be a fixed connection, that can be a detachable connection, or it can be an integrated connection. Or in another example, the connection can be a mechanical connection, or an electrical connection, or that it may be directly connected, or that it may be connected indirectly via an intermediate medium, or further yet, it may be a connection inside two elements. It will be appreciated by those skilled in the art that the meaning of these specific terms throughout this present disclosure will be understood on a case-by-case basis.

The reference to any prior art in this specification is not, and should not be taken as, an acknowledgement or any form of suggestion that such prior art forms part of the common general knowledge.

It will be understood that the terms "comprise" and "include" and any of their derivatives (e.g. comprises, comprising, includes, including) as used in this specification, and the claims that follow, is to be taken to be inclusive of features to which the term refers, and is not meant to exclude the presence of any additional features unless otherwise stated or implied.

In some cases, a single embodiment may, for succinctness and/or to assist in understanding the scope of the disclosure, combine multiple features. It is to be understood that in such a case, these multiple features may be provided separately (in separate embodiments), or in any other suitable combination. Alternatively, where separate features are described in separate embodiments, these separate features may be combined into a single embodiment unless otherwise stated or implied. This also applies to the claims which can be recombined in any combination. That is a claim may be amended to include a feature defined in any other claim. Further a phrase referring to "at least one of' a list of items refers to any combination of those items, including single members. As an example, "at least one of: a, b, or c" is intended to cover: a, b, c, a-b, a-c, b-c, and a-b-c.

It will be appreciated by those skilled in the art that the disclosure is not restricted in its use to the particular application or applications described. Neither is the present disclosure restricted in its preferred embodiment with regard to the particular elements and/or features described or depicted herein. It will be appreciated that the disclosure is not limited to the embodiment or embodiments disclosed, but is capable of numerous rearrangements, modifications and substitutions without departing from the scope as set forth and defined by the following claims.

## Claims

1. A lock for a pet transporter;
the lock comprising chassis housing a gear drive set, and at least two lock rods, wherein each lock rod extends from the gear drive set toward a corresponding lock hole on a door frame of the pet transporter;
wherein the gear drive set comprises a main gear comprising a tooth structure co-operable with a rack portion at an inner end of each lock rod;
wherein, in use, rotation of the main gear in a first direction synchronously drives the lock rods into the corresponding lock holes to engage the lock, and rotation of the main gear in an opposite direction synchronously drives the lock rods out of the corresponding lock holes to disengage the lock.

2. The lock of claim 1, wherein the rack portion of each lock rod comprises a tooth structure co-operable with the tooth structure of the main gear.

3. The lock of claim 2, wherein the tooth structure of the main gear co-operates with the rack portion of each lock rod by means of a transmission gear.

4. The lock rod of claim 1, wherein the lock comprises four lock rods arranged in a cross configuration centred at the main gear, such that the rack portion of each lock rod co-operates with the main gear.

5. The lock of claim 4, wherein the four lock rods comprise a first pair of lock rods and a second pair of lock rods that extend perpendicularly to the first pair, wherein the rack portions of each pair of lock rods are layered one above the other at the main gear.

6. The lock of claim 5, wherein each the inner end of each lock rod comprises a transmission section comprising a bent structure that enables the rack portion of each lock rod to engage with the main gear such that the lock rods of each of the first and second pairs remain in parallel or in a straight line opposite each other.

7. The lock of any one of the preceding claims, wherein the rack portion of each lock rod, the transmission gear, and the main gear co-operate in a rack and pinion arrangement.

8. The lock of claim 1, wherein the chassis further comprises a bottom wall and a perimeter side wall, wherein the bottom wall is provided with a positioning column for locating the main gear, and wherein the perimeter side wall is provided with a plurality of through holes, each through hole corresponding to each of the lock rods to pass there through.

9. The lock of claim 8, wherein the lock further comprises a shell comprising a cavity sized and shaped to receive at least a portion of the chassis, the gear drive set and a portion of the lock rods therein, a top of the shell comprising a first aperture for a rotatable knob and a second aperture for an anti-rotation knob, wherein rotation of the rotatable knob translates to rotation of the main gear, and wherein the anti-rotation knob having a first state whereby rotation of the rotatable knob is limited, and a second state whereby rotation of the rotatable knob is permitted.

10. The lock of claim 8, wherein the chassis further comprises one or more guide members positioned on the bottom wall so as to guide movement of each lock rod in a linear path.

11. The lock of claim 1, wherein the chassis further comprises a spring for the main gear, whereby the spring biases the main gear to synchronously drive the lock rods into their corresponding lock holes to engage the lock.

12. The lock rod of claim 4, wherein two of the four lock rods each comprise a handle member, wherein in use, squeezing the handle members causes rotation of the main gear and resultantly drive the other two lock rods to disengage the lock.

13. The lock of claim 4, wherein the gear drive set comprises four transmission gears, each transmission gear surrounding the main gear such that each transmission gear connects a corresponding lock rod to the main gear, wherein an angle between each lock rod is 90 degrees.

14. A pet transporter and a lock therefor, the pet transporter comprising:
a box body comprising an opening comprising a door frame, the door frame comprising a door body connected thereto along one side of the door frame, the door frame further comprising at least two lock holes;
wherein the lock of any one of claims 1 to 12 is installed on the door body such that each lock rod of the lock corresponds and is engageable with the lock holes to engage and disengage the lock, and secure or release the door body such that the opening is accessible.

15. A lock for a pet transporter;
the lock comprising a chassis housing a gear drive set, at least two lock rods, a shell comprising a cavity sized and shaped to receive at least a portion of the chassis, and a rotatable knob extending through an aperture of the shell;
wherein an inner end of each lock rod comprises a rack portion having a structure for engaging with a transmission gear of the gear drive set, each transmission gear having a structure for engaging with a main gear of the gear drive set such that rotation of the main gear drives rotation of each engaged transmission gear;
wherein the chassis comprises a bottom wall and a perimeter side wall, wherein the bottom wall is provided with a positioning column for locating the main gear, wherein the perimeter side wall is provided with a plurality of through holes, each through hole corresponding to each of the lock rods to pass there through; and
wherein, in use, rotation of the rotatable knob translates to rotation of the main gear, such that rotation in a first direction synchronously drives the lock rods outward in a linear direction to engage the lock, and rotation in an opposite direction synchronously drives the lock rods inward in a linear direction to disengage the lock.
